# EUROPEAN PATENT APPLICATION

(11) **EP 1 324 410 A1**
(43) Date of publication of application: **02.07.2003**
(21) Application number: 01972619.9
(22) Date of filing: 28.09.2001
(51) Int. Cl.: H01M 8/02

(54) **FUEL CELL**

(30) Priority: 29.09.2000 JP 2000301411
(71) Applicant: Sony Corporation, Tokyo 141-0001 (JP)
(72) Inventor: YAMAURA, Kiyoshi, SONY CORPORATION, Tokyo 141-0001 (JP); IMAZATO, Minehisa, SONY CORPORATION, Tokyo 141-0001 (JP); SATO, Nobuaki, SONY CORPORATION, Tokyo 141-0001 (JP)
(74) Representative: Rupp, Christian, Dipl.-Phys.
(86) International application number: PCT/JP01/08596
(87) International publication number: WO 02/027843

(57) **Abstract**

A fuel cell easy to manufacture and superior in cell performance. The fuel cell has a fuel electrode and an oxygen electrode facing each other with a proton conductor in-between. The fuel electrode and the oxygen electrode include current collectors containing carbon nano-tubes. The current collector containing carbon nano-tubes is high in strength and density and exhibits a superior function as current collector in conjunction with satisfactory electronic conductivity proper to the carbon nano-tubes. By employing the current collector containing carbon nano-tubes, it is unnecessary to take the mechanical strength of the fuel electrode or the oxygen electrode into consideration and hence these electrodes can be reduced in thickness.

## Description

### Technical Field

This invention relates to a fuel cell for producing electromotive force by reaction of a fuel, such as hydrogen, with oxygen.

### Background Art

Recently, a need is felt for the a substitute clean energy which may take the place of a fossil fuel, such as petroleum. For example, a hydrogen gas fuel is attracting notice.

Since hydrogen has a large energy contained per unit weight and, in use, does not emit obnoxious gases or gases contributing to global warming, it may be said to be an ideal energy source which is clean and moreover plentiful in supply.

In particular, researches in a fuel cell, capable of recovering an electrical energy form the hydrogen energy are proceeding briskly, and expectations may be made for application in large scale power generation or on-site self-generation of power, or as a power source for an electric vehicle.

The fuel cell includes a fuel electrode, such as a hydrogen electrode, and an oxygen electrode, arranged on both sides of a proton conductor film. By supplying fuel (hydrogen) and oxygen to these electrodes to induce a cell reaction to develop an electromotive force. In preparing the fuel cell, the proton conductor film, fuel electrode and the oxygen electrode are routinely molded separately and bonded together.

However, in forming the fuel electrode and the oxygen electrode separately, a variety of inconveniences arise due to difficulties encountered in handling. For example, if the strength of the fuel electrode or the oxygen electrode is taken into consideration, a certain thickness, for example, a thickness on the order of 100 µm or more, is needed. However, if the electrode thickness is increased, the cell reaction is lowered in efficiency, thus lowering the cell performance.

If, in order to evade this, the electrode thickness is decreased, the electrolyte film cannot be handled as an independent film, so that production yield is lowered significantly.

### Disclosure of the Invention

It is therefore an object of the present invention to provide a fuel cell which is easy to manufacture and superior in cell performance.

The present inventors have conducted a variety of researches, towards achieving the above object, and found that a sheet containing carbon nano-tubes can be of high strength and density and represents a material having superior current collecting characteristics, so that, by utilizing this sheet as a current collector, it is possible to construct a high performance fuel cell.

The present invention, completed on the basis of the above experimental results, resides in a fuel cell having a fuel electrode and an oxygen electrode, in which the fuel electrode and the oxygen electrode face each other with a proton conductor in-between, wherein the fuel electrode and/or the oxygen electrode including a current collector contain carbon nano-tubes.

The current collector containing the carbon nano-tubes is high in strength and density and, in conjunction with the high electronic conductivity proper to the carbon nano-tubes, exhibit a superior function as the current collector.

Moreover, by employing the current collector containing carbon nano-tubes, it becomes unnecessary to take the mechanical strength of the fuel electrode or the oxygen electrode, and hence these electrodes can be reduced in thickness. The result is that, in the fuel cell produced, the cell reaction takes place efficiently to improve the cell performance.

The other objects of the present invention and specific advantages provided by the present invention will be clarified further from the following description of embodiments.

### Brief Description of the Drawings

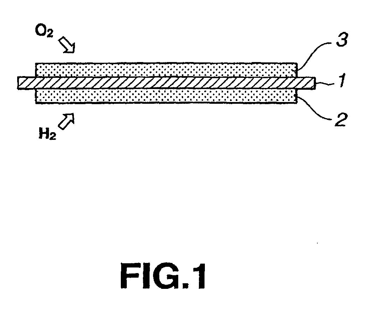

Fig.1 is a schematic cross-sectional view showing a basic structure of a fuel cell.
Fig.2 is a schematic view showing a typical arc discharge device used for the preparation of a carbon nano-tube.
Figs.3A to 3C are schematic views showing a variety of carbonaceous materials contained in a carbon soot prepared on arc discharge.
Fig.4 is a schematic view showing various examples of a carbon cluster.
Fig.5 is a schematic view showing another example of a carbon cluster (partial fullerene structure).
Fig.6 is a schematic view showing still another example of a carbon cluster (diamond structure).
Fig.7 is a schematic view showing yet another example of a carbon cluster (plural clusters bonded together).
Fig.8 schematic shows a specified illustrative structure of a fuel cell.

### Best Mode for Carrying out the Invention

Referring to the drawings, a fuel cell according to the present invention will be explained in detail.

The structure of the fuel cell is basically made up of a proton conductor film 1 exhibiting proton conductivity and a fuel electrode 2 and an oxygen electrode 3 formed on respective surfaces of the proton conductor film 1.

If hydrogen, for example, is supplied to the fuel electrode 2, whilst oxygen is supplied to the oxygen electrode 3, cell reaction occurs to produce an electromotive force. In the case of a so-called direct methanol system, methanol may also be supplied as a hydrogen source to the fuel electrode 2.

According to the present invention, a sheet including carbon nano-tubes is used as a current collector for a fuel electrode 2 and for an oxygen electrode 3.

The carbon nano-tubes are in the form of elongated fibers approximately 1to 3 nm in diameter and 1 to 10 µm in length. When shaped into a sheet, the carbon nano-tubes are entangled together to develop a high strength despite the reduced thickness of the sheet.

Moreover, the carbon nano-tubes are of extremely high electronic conductivity so that the sheet exhibits superior characteristics as a current collector. For example, the sheet of the carbon nano-tubes has an electrical resistance not larger than one-half that of the routine carbon sheet, so that, by using the carbon nano-tubes as the electrode current collector of the fuel cell, it is possible to raise the output voltage as well as to make efficient use of the cell energy. The carbon nano-tubes also meritorious in being lightweight, strong against acid and low in production cost.

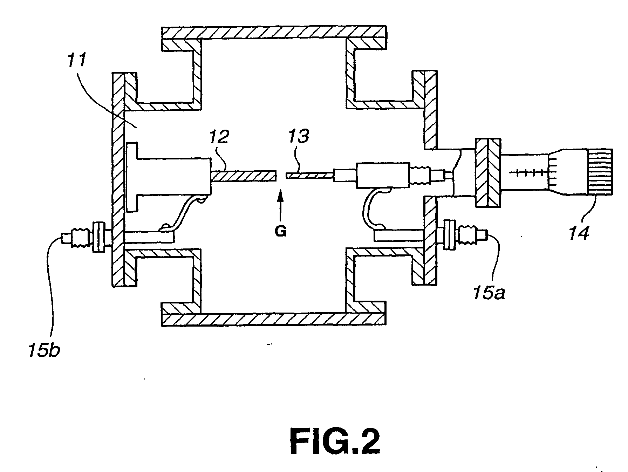

Fig.2 shows a typical arc discharge device used for the preparation of a carbonaceous material including carbon nano-tubes. In the present apparatus, a negative electrode 12 and a positive electrode 13, both made up of rods of carbon, such as graphite, are arranged facing each other with a gap G in-between within a reaction chamber 11, such as a vacuum chamber. The rear end of the positive electrode 13 is connected to a linear movement introducing mechanism 14. The electrodes 13, 12 are connected to current introducing terminals 15a, 15b, respectively.

If, in the above arrangement, the inside of the reaction chamber 11 is evacuated and subsequently charged with rare gases, such as helium, and the DC current is supplied to the respective electrodes, an arc discharge is produced across the negative electrode 12 and the positive electrode 13. Thus, a soot-like carbonaceous material is deposited on the inner surface of the reaction chamber 11, that is on the sidewall surface, ceiling surface and on the bottom surface, and on the negative electrode 12. Meanwhile, if a small-sized vessel is attached to e.g., the sidewall surface, the soot is also deposited therein.

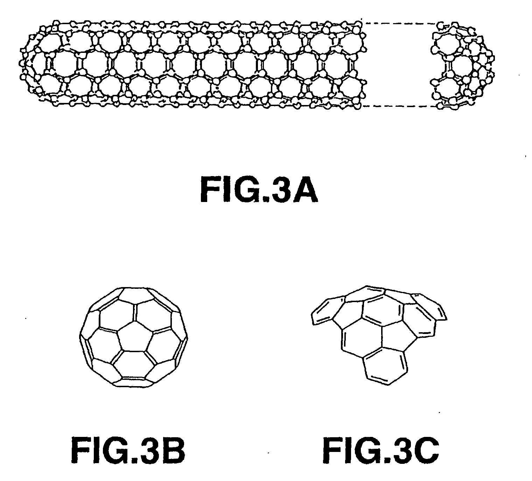

In the soot-like carbonaceous material, recovered from the reaction chamber 11, there are contained carbon nano-tubes, shown in Fig.3A, C60 fullerene, shown in Fig.3B, C70 fullerene, not shown, and carbon soots, shown in Fig.3C. These carbon soots are those having a curvature which obstructed the growth of the soots to fullerene molecules or carbon nano-tubes. By way of a typical composition, this soot-like carbonaceous material may be made up of 10 to 20% of fullerene, such as C60 or C70 and a few % of carbon nano-tubes, with the balance being a large quantity of the carbon soot.

In the above-described carbonaceous material, 20 wt% or less of a metal having a catalytic action of separating a hydrogen molecule to a hydrogen atom and further to a proton and to an electron may preferably be carried by any suitable known method on at least the surface of the carbonaceous material. The metal exhibiting a catalytic action may be exemplified by, for example, platinum or platinum alloys. If such catalytic metal is carried as described above, the efficiency of the cell reaction may be higher than otherwise.

As the proton conductor film 1, any suitable material exhibiting protonic conductivity may be used. For example, a proton conducting material may be coated on and carried by a separator for use as the proton conductor film 1.

Specifically, the materials usable as the proton conductor film 1 may be enumerated by a polymer materialcapable of conducting protons (hydrogen ions), such as perfluorosulfonic acid resin, for example, Nafion(R) manufactured by Du Pont SA.

As proton conductors, developed only recently, polymolybdenic acids or oxides having a large number of hydrates, such as H₃Mo₁₂PO₄₀·29H₂O or Sb₂O₅·5.4H₂O, may be used.

If placed in a wet state, these high molecular materials exhibit high proton conductivity at or near ambient temperature.

Taking the perfluorosulfonic acid resin as an example, protons electrically dissociated from the sulfonic acid group are bound with the moisture taken in large quantities into the high molecular matrix by a hydrogen bond to generate protonated water, that is oxonium ions (H₃O⁺), such that protons can be smoothly migrated in the high molecular matrix in the form of these oxonium ions. So, this type of the matrix material may exhibit appreciably high proton conductivity even at or near ambient temperature.

Alternatively, a proton conductor having a conduction mechanism totally different from that of the aforementioned materials may also be used.

These alternative materials are composite metal oxides having a perovuskite structure, such as Yb-doped SrCeO₃. These composite metal oxides having a perovuskite structure, have been found to exhibit protonic conductivity without having recourse to the moisture as the medium for movement. In these composite metal oxides, the protons are inferred to be conducted by channeling by themselves through oxygen ions forming the skeleton of the perovskite structure.

As the material for the proton conducting material forming the proton conductor 5, such a proton conductor comprised of a carbonaceous material, formed mainly of carbon, as a matrix, and proton dissociative groups introduced therein, may be used. The "proton dissociative groups" means functional groups from which protons (H⁺) may be detached by ionic dissociation.

The proton dissociative groups may be enumerated by -OH, -OSO₃H, -SO₃H, -COOH, and -OPO(OH)₂.

In this proton conductor, protons are migrated through the proton dissociative groups to manifest ion conductivity.

As the carbonaceous material, forming the matrix, any suitable material, mainly composed of carbon, may be used. It is, however, preferable that ion conductivity is relatively high and electronic conductivity is low after introducing the proton dissociative groups.

Specifically, a carbon cluster, as an aggregate of carbon atoms, tubular carbon materials, typically including carbon nano-tubes, may be used as the carbonaceous material.

Among a variety of carbon clusters, fullerene, a fullerene structure having an opening end at least at a portion thereof, or a diamond structure, is preferred.

This carbon cluster is explained further in detail.

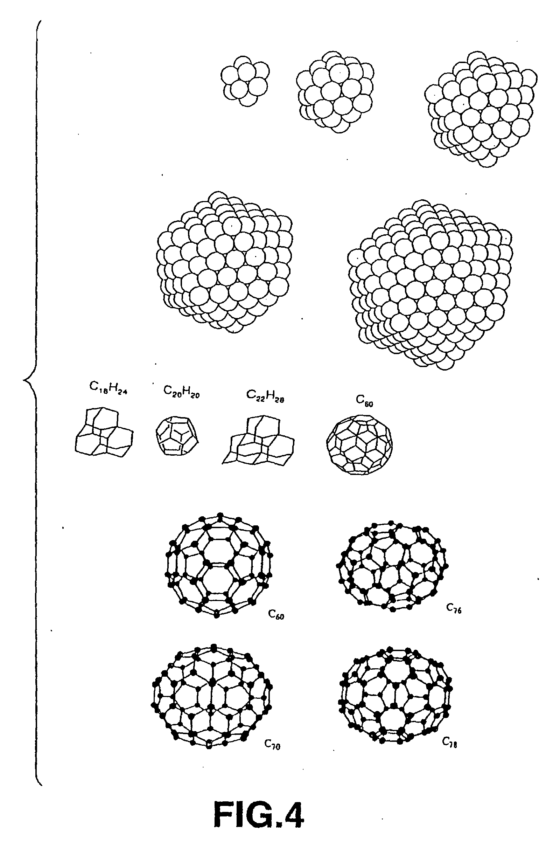

A cluster routinely means an aggregate of several to hundreds of atoms, bound or flocculated together. If these atoms are carbon atoms, such flocculation or aggregation improves proton conductivity while simultaneously holding chemical properties to provide for sufficient film strength and for ease in forming layers. A 'cluster mainly composed of carbon' means an aggregate of several to hundreds of carbon atoms regardless of the type of the carbon-carbon bonds. Such cluster may, however, not be composed only of carbon atoms, such that other atoms may be present with the carbon atoms. Thus, in order to encompass such case, an aggregate the major portion of which is composed of carbon atoms is termed a carbon cluster. Examples of these aggregates are shown in Figs.4 to 7 in which the proton dissociative groups are omitted. It may be seen that there are a wide latitude for selection of types of proton conducting materials.

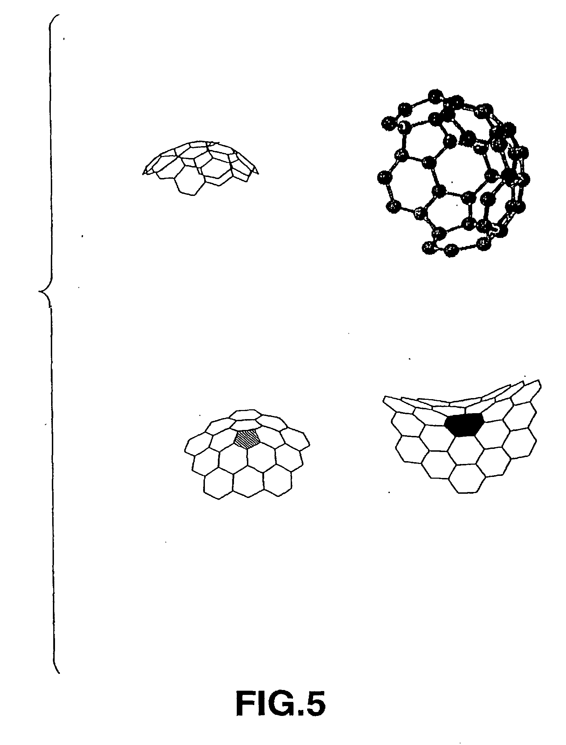

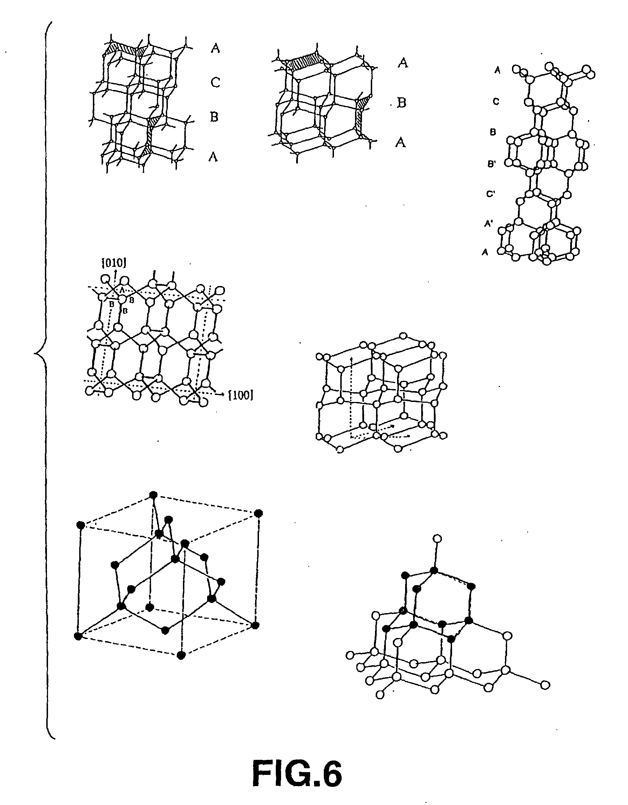

Fig.4 shows a variety of carbon clusters, each composed of a large number of carbon atoms and each having the structure of a closed surface similar to that of a sphere, an elongated ball and so forth. In Fig.5, molecular fullerenes are also shown. Fig.5 shows a variety of carbon clusters the spherical structures of which are partially interrupted. These types of the carbon clusters feature open ends in the structures. A large number of such structures may be seen as by-products in the process of the fullerene manufacturing process by arc discharge. If the major portion of the carbon atoms of the carbon cluster are bound in an SP³ bond, a diamond structure is produced, such as is shown in the structure of the various clusters shown in Fig.6.

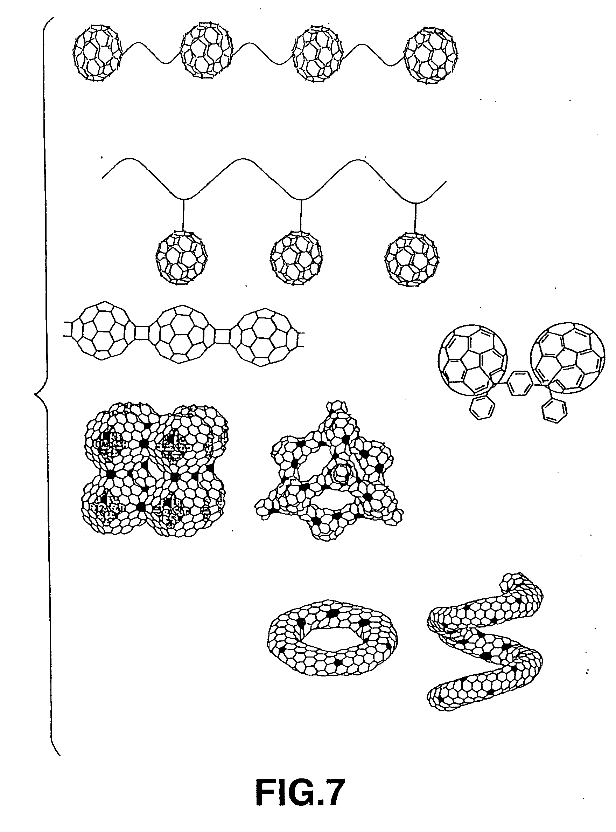

Fig.7 shows several examples in each of which different clusters are bound together. The present invention may be applied to this type of the structure.

In the proton conductor containing, as main component, the aforementioned carbonaceous material having proton dissociative groups, protons tend to be dissociated from the groups, even in a dried state. Moreover, these protons are able to exhibit high conductivity over a wide temperature range including the ambient temperature , such as a temperature range at least from 160°C to -40°C. Although this proton conductor exhibiting sufficient proton conductivity even in a dried state, the presence of the moisture may be tolerated. Such moisture may be that intruded from outside.

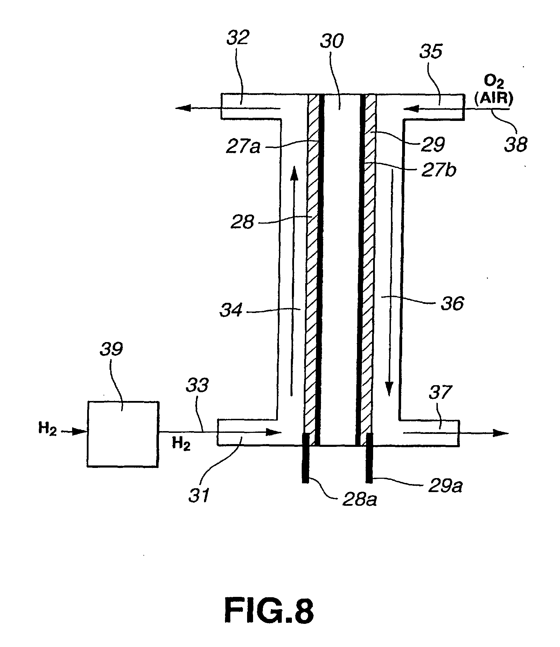

Fig.8 shows a specified illustrative structure of a fuel cell into which are assembled the aforementioned electrodes and the proton conductor.

This fuel cell includes a negative electrode (fuel electrode or hydrogen electrode) 28 and a positive electrode (oxygen electrode) 29, having catalysts 27a and 27b intimately bonded thereto or scattered therein, and a proton conductor unit 30 between these electrodes. From the negative electrode 28 and the positive electrode 29 are derived terminals 28a, 29a for connection to external circuitry.

In this fuel cell, hydrogen is supplied in use via an inlet 31 on the side negative electrode 28, so as to be discharged via outlet 32, which may optionally be omitted. As the fuel (H₂) traverses a channel 34, protons are generated and migrated along with protons generated in the proton conductor unit 30 towards the positive electrode 29 where they are reacted with oxygen (air) supplied via inlet 35 to the channel 36 to flow towards the outlet 37 to recover desired electromotive force.

In the above-described arrangement, a hydrogen occlusive alloy or a carbonaceous material for hydrogen occlusion is stored in a hydrogen supply source 39. This material may also have hydrogen occluded therein at the outset so as to be accommodated in this state in the hydrogen supply source 39.

By executing examples and a comparative example of a fuel cell according to the present invention, which is described further, the correlation between carbon nano-tube content and fuel cell characteristics is studied. The result is shown in the table 1.

### Example 1

1 wt% of carbon nano-tubes (produced on arc discharge; 96% purity) was added to activated charcoal powders having a surface area of 1000 m²/g. Using a water-soluble platinum compound, such as H₂PtCl₆, 20 wt% of fine particles of platinum were deposited by a chemical deposition method from the outset on the activated charcoal surface. After mixing, 15 wt% of Nafion (reagent manufactured by Aldrich) based on the weight of the platinum carrying carbon were mixed and rendered ink-like. This ink-like product was coated by a spin coating method on a Nafion film (Nafion 117). After drying, the coating thickness was measured with a film thickness gauge.

The current collecting characteristics of the electrode were evaluated by measuring the specific resistance of the electrode surface by a four terminal method. Output characteristics were measured by a current value on applying a voltage of 0.6 V. Dry hydrogen was caused to flow to the fuel electrode at a rate of 50 ml/min, whilst humidified oxygen was caused to flow to the oxygen electrode at a rate of 50 ml/min. The voltage of 0.6 V was used because the working voltage of a commercially available portable equipment is based on 1.2 V and the voltage produced on connecting the two equipment gives the voltage of 1.2 V so that this voltage may be supposed to be used most frequently.

### Example 2

An electrode similar to that of Example 1 was prepared and evaluated in the same way as in Example 1 except setting the carbon nano-tube mixing ratio to 20 wt%.

### Example 3

An electrode similar to that of Example 1 was prepared and evaluated in the same way as in Example 1 except setting the carbon nano-tube mixing ratio to 40 wt%.

### Example 4

An electrode similar to that of Example 1 was prepared and evaluated in the same way as in Example 1 except setting the carbon nano-tube mixing ratio to 60 wt%.

### Example 5

An electrode similar to that of Example 1 was prepared and evaluated in the same way as in Example 1 except setting the carbon nano-tube mixing ratio to 80 wt%.

### Example 6

An electrode similar to that of Example 1 was prepared and evaluated in the same way as in Example 1 except setting the carbon nano-tube mixing ratio to 100 wt%.

### Comparative Example 1

An electrode similar to that of Example 1 was prepared and evaluated in the same way as in Example 1 except setting the carbon nano-tube mixing ratio to 0 wt%.

**Table 1**

| Correlation between Carbon Nano-Tube Content and Fuel Cell Characteristics | | | |
|---|---|---|---|
| | carbon nano-tube content (wt%) | current density (mA/cm²) | specific resistance (Ωcm) |
| Ex.1 | 1 | 480 | 8.0 |
| Ex.2 | 20 | 600 | 6.0 |
| Ex.3 | 40 | 750 | 4.0 |
| Ex.4 | 60 | 880 | 2.0 |
| Ex.5 | 80 | 1100 | 1.1 |
| Ex.6 | 100 | 1450 | 0.4 |
| Comp. Ex.1 | 0 | 200 | 18.0 |

### Industrial Applicability

A fuel cell according to the present invention, employs a sheet containing carbon nano-tubes, which is superior in strength and electronic conductivity, to significantly improve the cell performance. Further, as the strength of a fuel electrode and an oxygen electrode can be secured, the fuel cell is easy to handle and also advantageous to manufacture.

## Claims

1. A fuel cell having a fuel electrode and an oxygen electrode, the fuel electrode and the oxygen electrode facing each other with a proton conductor in-between, wherein
the fuel electrode and/or the oxygen electrode include a current collector containing carbon nano-tubes.

2. The fuel cell according to claim 1 wherein the fuel electrode and/or the oxygen electrode include catalyst metal.

3. The fuel cell according to claim 2 wherein the catalyst metal is platinum or a platinum alloy.

4. The fuel cell according to claim 1 wherein the proton conductor is formed by a matrix of a carbonaceous material mainly composed of carbon and proton dissociative groups introduced therein.
